# EUROPEAN PATENT APPLICATION

(11) **EP 2 662 781 A2**
(43) Date of publication of application: **13.11.2013**
(21) Application number: 13001960.7
(22) Date of filing: 15.04.2013
(51) Int. Cl.: G06F 17/27

(54) **Entity name variant generator**

(30) Priority: 07.05.2012 US 201213465848
(71) Applicant: SAP AG, 69190 Walldorf (DE)
(72) Inventor: Botros, Sherif, 69190 Walldorf (DE); Herman, David, 69190 Walldorf (DE); Shami, Mohammad, 69190 Walldorf (DE)
(74) Representative: Müller-Boré & Partner Patentanwälte

(57) **Abstract**

Data is received that comprises an entity name. Thereafter, it is determined (i) whether there are any punctuation variations for the entity name, (ii) whether there is at least one character to drop from the entity name, and (iii) whether there are alternative equivalents of at least a portion of the entity name. After such determinations have been made, a plurality of variants for the entity name is generated based on a combination of each determined punctuation variation, determined at least one character to drop, and determined alternative equivalent. Related apparatus, systems, techniques and articles are also described.

## Description

### TECHNICAL FIELD

The subject matter described herein relates to the generation of variants of entity names for a variety of applications.

### BACKGROUND

The process of collecting information about entities, whether online or via database queries, is difficult given the variable manner in which such entities can be identified. For example, a company having a full legal name of "Advanced Technology Research, Corporation" could be referred to as one or more of Advanced Technology Research Corporation, Advanced Technology Research, Advanced Technology Research Corp., Advanced Technology Research Inc., ART, ARTC and more. A query of an information source of the legal name of such company would not result in any of the variants being identified as a match.

### SUMMARY

In a first aspect, data is received that comprises an entity name. Thereafter, it is determined (i) whether there are any punctuation variations for the entity name, (ii) whether there is at least one character to drop from the entity name, and (iii) whether there are alternative equivalents of at least a portion of the entity name. After such determinations have been made, a plurality of variants for the entity name is generated based on a combination of each determined punctuation variation, determined at least one character to drop, and determined alternative equivalent.

The plurality of variants can be used to generate an expression (e.g., a pattern, etc.). This expression can be stored, transmitted to a remote computing system and/or displayed (e.g., on a monitor on a client computing system, etc.). One or more queries of data sources (e.g., websites, databases, etc.) can be initiated / executed using the expression to obtain data associated with the entity name. The expression can also be used to monitor one or more data feeds for data associated with the entity name.

In some implementations, determining whether there is at least one character to drop from the entity name includes tokenizing the entity name, and tagging the resulting tokens with a corresponding part of speech. If the number of tokens is below a certain threshold and there are no tagged tokens corresponding to a proper name, then no portions of the entity name can be dropped.

Determining whether there is at least one character to drop from the entity name can include determining a length of the entity name. If a length of the entity name is below a pre-defined threshold, no remaining portions of the entity name can be dropped.

Determining whether there is at least one character to drop from the entity name can include determining whether portions of the entity name correspond to statistically common terms. Thereafter, portions of the entity name corresponding that in combination are less common than the common statistically common terms can be maintained (i.e., not dropped, etc.). Portions of the entity name corresponding to proper names can be maintained.

Generating the plurality of variants can include one or more of removing quotes, preserving special punctuation, preserving dashes, removing bracketed terms, and replacing multiple spaces with single spaces.

In an interrelated aspect, data can be received that includes an entity name. Thereafter, portions of the entity name to drop can be determined and portions of the entity name having alternative equivalents can be determined. At this point, a first plurality of variants of the entity name can be generated based on the determined portions of the entity name to drop and the determined portions of the entity name having alternative equivalents. Subsequently, punctuation variations for the variants in the first plurality of variants can be determined. A second plurality of variants of the entity name can be generated based on the determined punctuation variations and derived from the first plurality of variants. An expression can then be generated comprising the second plurality of variants.

Articles of manufacture are also described that comprise computer executable instructions permanently stored (e.g., non-transitorily stored, etc.) on computer readable media, which, when executed by a computer, causes the computer to perform operations herein. Similarly, computer systems are also described that may include a processor and a memory coupled to the processor. The memory may temporarily or permanently store one or more programs that cause the processor to perform one or more of the operations described herein. In addition, methods can be implemented by one or more data processors either within a single computing system or distributed among two or more computing systems.

The subject matter described herein provides many advantages. The current subject matter is advantageous in that it enables the generation of likely variants of an entity name. These entity variants can be used for a wide variety of applications that collect or monitor data relating to entities.

The details of one or more variations of the subject matter described herein are set forth in the accompanying drawings and the description below. Other features and advantages of the subject matter described herein will be apparent from the description and drawings, and from the claims.

### DESCRIPTION OF DRAWINGS

FIG. 1 is a process flow diagram illustrating the generation of variants of an entity name; and

FIG. 2 is a diagram illustrating the generation of an expression based on the entity name.

### DETAILED DESCRIPTION

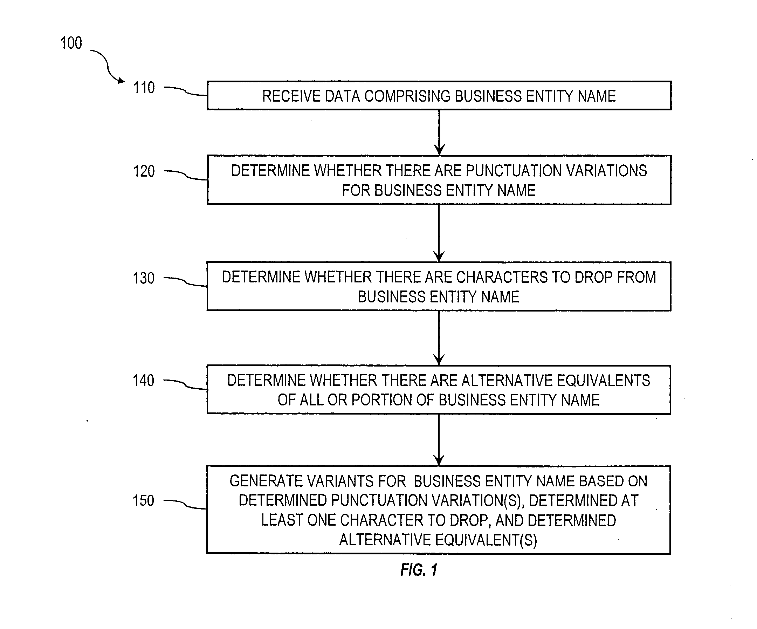

FIG. 1 is a process flow diagram illustrating a method 100, in which at 110, data is received that comprises an entity name. Using this entity name, it is determined at 120, whether there are any punctuation variations for the entity name. In addition, at 130, it is determined whether there is at least one character to drop from the entity name and it is determined, at 140, whether there are alternative equivalents of at least a portion of the entity name. Using a combination of these determinations, at 150, a plurality of variants for the entity name is generated. In particular, at 150, the result of all of the determinations (i.e. 120, 130, and 140) may be used to generate the plurality of variants. Alternatively, at 150, one or more of the resulting determinations may be used to generate the plurality of variants.

The current subject matter can be used in a variety of implementations in which entities (e.g. business entities) need to be monitored via a variety of data sources (such as website, etc.) that have different naming conventions. With the current subject matter, a custom entity extraction rule can be derived from an entity name. An entity name can be inputted to result in a regular expression that encodes all the different possible variations of the same name. The regular expression can allow for fuzzy matches (e.g., matches less than 100%) such as those resulting from word abbreviations, variants, word insertions, and word deletions of the entity name.

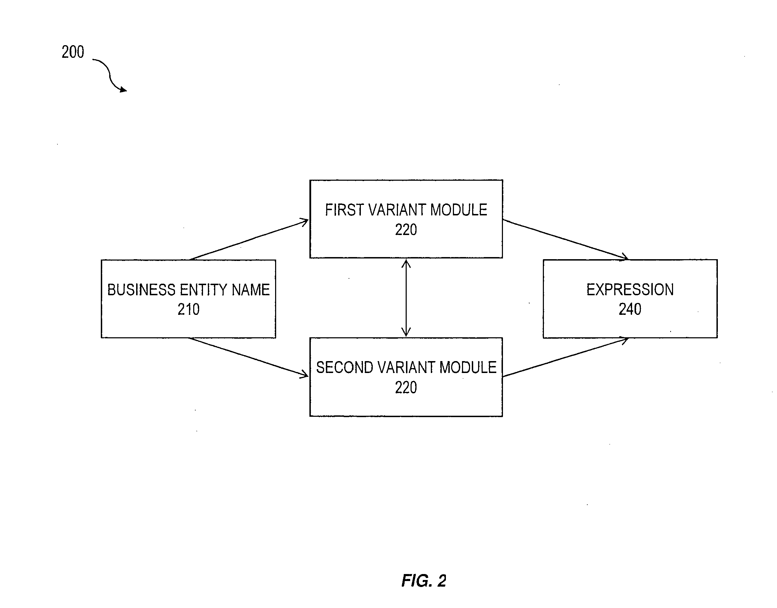

With reference to the diagram 200 of FIG. 2, the entity name 210 can be converted into an expression 240 which can be used, for example, for querying or monitoring data sources such as news feeds. The conversion can create variants based on (i) punctuation of the entity name using a first variant module 220 and (ii) whether certain portions of the name can be dropped (while at the same time referencing the business entity) or exchanged for alternative equivalents using a second variant module 230. In particular, (ii) may refer to a situation where certain portions of the entity name can be dropped, yet a business entity referred to by the entity name can still be identified. While the variant modules 220, 230 are illustrated as being separate - it will be appreciated that the two modules 220, 230 can form part of a single module / program (and in some cases as described below, the second variant module 230 can be nested in the first variant module 220).

The entity name 210 can be represented by a text field in a database record along with a record identification number. The first variant module 220 creates variants based on punctuation (which as used herein also includes spacing and other text items such as brackets - unless explicitly stated otherwise). Variants can be created by the first variant module 220 that remove quotes, and/or detect and preserve special usage of punctuation (e.g., the exclamation point in Yahoo! or the double plus signs in Agent++, etc.), and/or preserve dashes that separate compound names as in Hewlett-Packard, and/or remove words in brackets, and/or replace multiple spaces with a single space. A last word drop routine (described below) can then be implemented to result in a number of alternative endings for a company name such as ABC Inc, ABC Incorporated, ABC Corp, ABC Corporation from an original company name of ABC Corp. Every possible company name ending variant of a word is looped through in descending order of the string length of the variant and a number of changes is then attempted, evaluated not to over generalize and reverted back if over-generalization is detected.

The following provides pseudocode that describes one implementation of the first variant module 220.

```
sub generate_pattern ($value, $surface_to_pos_map_ref, $purpose)
     {
            Remove quotes everywhere;
            Detect and preserve special usage of punctuation;
            Replace certain punctuation with a single space;
            Preserve and escape dashes;
            Remove words in brackets;
            Replace multiple spaces with single space;
            Return with no pattern if remaining string is too short;
            Initialize last word drop words structure as hash of surface words -> (
            hash of equivalent surface words + canonicals -> empty string )
            Initialize $number_of_changes = 0 ;
            Loop through every surface last word drop word in last word drop words
            structure, in descending order of string length
```

The second variant module 230 acts to define variants based on words / portions of words in the entity name 210 that can be dropped by various data sources or words or portions of words that have alternative equivalents (e.g., Inc. is an alternative equivalent to Incorporated, etc.). The last word of the entity name 210 can be dropped and the resulting string can be tokenized. The tokenized string can be tagged to identify parts of speech (e.g., verb, noun, adjective, proper name, etc.). If a number of tokens is less than a threshold such as three and there are no tokens tagged as proper names, the process of removing potentially droppable words can be terminated. Similarly, the process can be terminated if the string is too short such that words cannot be dropped or abbreviated. If the string matches a known string or a statistically common string - the process can also be terminated. In some cases dropped words such as "Inc." can be added back in order to avoid using variants likely to result in responses / hits unrelated to the entity name. If the number of tagged proper names in the string and the number of tokens are both equal (e.g., one, etc.), then the string might be maintained and the process of determining whether certain words can be dropped is terminated.

In addition, if the number of changes are above a threshold (e.g., two, etc.) and the number of tokens is at or below a threshold (e.g., one, etc.) then the process can also be stopped as the resulting string would be too short or non-existent (or overly generalized). After this process, every remaining drop word can be replaced with an alternative equivalent (e.g., Inc., Incorporated, Corp., Corporation, etc.). Tokens having certain tagged parts of speech (e.g., conjuctions, etc.) can be generalized (for example, "&" can be generalized as "and", etc.). In addition, capitalization can be changed (e.g., made case insensitive, first letter capitalized, etc.) for any surviving words. Thereafter, the variant

The following provides pseudocode that describes one implementation of the second variant module 230 (in particular a drop word loop as referenced above):

DROPWORD_LOOP:

```
foreach my $last_word_dropword (reverse sort { length($a) <=> length($b) }
 keys %$last_word_dropwords_lower_to_upper_ref)
            {
                    Save the string value in case we need to revert ;
                   if $last_word_dropword matched the end of $value
                    delete $last_word_dropword ;
                   else
                           next;
                   tokenize $value ;
                   perform Part of Speech tagging;
                   get total number of tokens ;
                   get total number of tokens with Proper Name Part of speech.
                   if ($number_of_props_in_value == 0 and $number_of_tokens < 3)
                    {
                           if (0)
                           {
                                  print "Detected a common word we should not
                           expand name into: $value\n";
                           }
                           revert $value ;
                          Finish and stop trying to remove potentially droppable
words;
                   }
                   if $value is too short, three or two letters regardless of punctuation
                    {
                          if (0)
                           {
                                  print "the value at this point is : $value \n";
                                  print " reverting due to length\n";
                           }
                          revert $value ;
                          Finish and stop trying to remove potentially droppable
 words;
                   }
                   if $value matches a known string to avoid such as CA then revert
CA back to CA, Inc
                    or if $value matches a statistically common word such as And ,
WITH etc ..
                   {
                          if (0)
                           {
                                  print "Detected a common entity we should not
                          expand name into: $value\n";
                           }
                          revert $value ;
                          Finish and stop trying to remove potentially droppable
words;
                   }
                    if ($number_of_props_in_value = 1 and $number_of_tokens =
1)
                    {
                           if (0)
                           {
                                  print "This might be the case of Harris Corporation:
$value\n";
                           }
                           if (0)
                           {
                                  print "Testing $value for the case of Harris
Corporation\n";
                           }
                           Run ThingFinder on $value ;
                           If $value is found to match a PERSON or a CITY name
then
                                  print "Found single word person name !, reverting
                           $value to $old_value";
                                  revert $value ;
                                  Finish and stop trying to remove potentially
droppable words ;
                    }
                   if ($value ne $old_value) # a drop word has been removed
                    {
                           $number_of_changes++;
                    }
                   if ($number_of_changes >= 2 and $number_of_tokens == 1)
                    {
                           # avoid dropping too many words relative to the remaining
                   number of tokens. Avoids over-generalization
                          print "changing :$value back to : $old_value\n";
                          print "This is the case of Collins MFG INC\n";
                           revert $value ;
                           Finish and stop trying to remove potentially droppable
words;
                   }
                   if (0)
                    {
                          print STDERR "Was: $old_value became $value\n" ;
                   }
            }
            replace every surviving last word dropword with an alternation of
            equivalent dropwords (Inc. -> Incorporated | Corporation | Corp etc ..) ;
            generalize "and", '&' etc ..
            Make case insensitive as appropriate given lengths of different surviving
words;
            form final regex;
            return $value ;
            } 
```

The generated expression 240 can be used in a variety of scenarios. It can be stored, transmitted, and/or displayed depending on the desired implementation. For example, the variants in the generated expression 240 can be used to monitor unstructured text sources such as websites and text snippets to identify relevant subject matter associated with the entity. Systems utilizing entity name variants are described in U.S. App. Ser. No. 13/465,869 entitled: "Enterprise Resource Planning System Entity Event Monitoring", with inventor Mohammad Shami, and filed on May 7, 2012. The entity variants can also be used to generate an index mapping such variants to the entity name. Database record fields (or combinations of fields) can be queried using these variants so that matching records can be obtained for a variety of applications.

The following tables provide examples of generated patterns defming variants of company names:

**Table 1**

| Name and ID in ERP | "JAI, INC." 109405 |
|---|---|
| Generated Pattern | #group MyPattern_CompanyName_109405_NA: { (<(JAI)>)((<\,>? ( <\p{ci}(Incorporated)> <\p{ci}(Incorporated\.)>) )\|(<\,>? (<\p{ci}(Inc)>(Inc) \| <\p{ci}(Inc\.)>) )\|(<\,>? ( <\p{ci} (Corporation)> \|<\p{ci} (Corporation\.)>) )\|(<\,>? (<\p{ci}(Corp)> \| <\p{ci}(Corp\.)>) )) } |
| Comment | Short proper name should keep its company name indicator |

**Table 2**

| Name and ID in ERP | "AVTECH CORPORATION" 102253 |
|---|---|
| Generated Pattern | #group MyPattern_CompanyName_205477_NA: {(<\p{ci} (AVTECH)>) } |
| Comment | Long proper name should can lose its company name indicator |

**Table 3**

| Name and ID in ERP | "ASHCROFT INC" 200064 |
|---|---|
| Generated Pattern | #group MyPattern_CompanyName_200064_NA: { (<\p{ci}(ASHCROFT)>)((<\,>? (<\p{ci}(Incorporated)> \| |
| | <\p{ci}(Incorporated\.)>) )\|(<\,>? (<\p{ci}(Inc)> \| <\p{ci}(Inc\.)>))\|(<\,>? (<\p{ci}(Corporation)>\|<\p{ci}(Corporation\.)>))\|(</,>? ( <\p{ci}(Corp)> \| <\p{ci}(Corp\.)>))) } |
| Comment | Long proper name that can be a person or city name cannot lose its company name indicator |

**Table 4**

| Name and ID in ERP | "DURABLE MFG CO" 200352 |
|---|---|
| Generated Pattern | #group MyPattern_CompanyName_200352_NA: { (<\p{ci}(DURABLE)>)((<\,>>? (<\p{ci} (and)> \|<\p{ci}(and\.)>) <\,>? ( <\p{ci}(Manufacturing)> \| <\p{ci}(Manufacturing\.)>))\|(<\,>? ( <\p{ci}(&)> \| <\p{ci}(&\.)>) <\,>? (<\p{ci} (MFG)> \| <\p{ci}(MFG\.)>) )\|(<\,>? (<\p{ci}(and)> \| <\P{ci}(and\.)>) <\,>? (<\p{ci}(MFG)> \| <\p{ci}(MFG\.)>) )\|(<\,>? (<\p{ci}(MFG)> \| <\p{ci}(MFG\.)>) )\|(<\,>? ( <\p{ci}(Manufacturing)> \| <\p{ci}(Manufacturing\.)>) )\|(<\,>? ( <\p{ci}(&)> \| <\p{ci}(&\.)>) <\,>? ( <\p{ci}(Manufacturing)> \| [ <\p{ci}(Manufacturing\.)>) )\|(<\,>? (<\p{ci}(Manufacturing)> \| <\p{ci}(Manufacturing\.)>))) } |
| Comment | Non-proper name (one adjective in this case) shorter or equal to two words or fewer cannot lose more than one company name indicator |

Various implementations of the subject matter described herein may be realized in digital electronic circuitry, integrated circuitry, specially designed ASICs (application specific integrated circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the term "machine-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the subject matter described herein may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The subject matter described herein may be implemented in a computing system that includes a back-end component (e.g., as a data server), or that includes a middleware component (e.g., an application server), or that includes a front-end component (e.g., a client computer having a graphical user interface or a Web browser through which a user may interact with an implementation of the subject matter described herein), or any combination of such back-end, middleware, or front-end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

Although a few variations have been described in detail above, other modifications are possible. For example, the logic flow depicted in the accompanying figures and described herein do not require the particular order shown, or sequential order, to achieve desirable results. Other embodiments may be within the scope of the following claims.

## Claims

1. A method for implementation by one or more data processors comprising:
receiving, by at least one data processor, data comprising an entity name;
determining, by at least one data processor, whether there are any punctuation variations for the entity name;
determining, by at least one data processor, whether there is at least one character to drop from the entity name;
determining, by at least one data processor, whether there are alternative equivalents of at least a portion of the entity name; and
generating, by at least one data processor, a plurality of variants for the entity name based on a combination of the determined punctuation variation, the determined at least one character to drop, and the determined alternative equivalent.

2. A method as in claim 1, further comprising: generating, by at least one data processor, an expression comprising the plurality of variants.

3. A method as in claim 2, further comprising one or more of: storing, by at least one data processor, the expression, transmitting, by at least one data processor, the expression to a remote computing system, and displaying, by at least one data processor, at least a portion of the expression.

4. A method as in claim 2 or 3, further comprising: initiating, by at least one data processor, one or queries of data sources using the expression to obtain data associated with the entity name.

5. A method as in claim 4, wherein the data sources comprise at least one website.

6. A method as in claim 4 or 5, wherein the data sources comprise at least one database.

7. A method as in any one of claims 2 to 6, further comprising: monitoring, by at least one data processor, one or more data feeds for data associated with the entity name using the expression.

8. A method as in any one of the preceding claims, wherein determining whether there is at least one character to drop from the entity name comprises:
tokenizing, by at least one data processor, the entity name; and
tagging, by at least one data processor, the resulting tokens with a corresponding part of speech.

9. A method as in claim 8, wherein no portions of the entity name are dropped if a number of tokens is below a certain threshold and there are no tagged tokens corresponding to a proper name.

10. A method as in any one of the preceding claims, wherein:
determining whether there is at least one character to drop from the entity name comprises determining a length of the entity name; and
no remaining portions of the entity name are dropped if a length of the entity name is below a pre-defined threshold.

11. A method as in any one of the preceding claims, wherein:
determining whether there is at least one character to drop from the entity name comprises determining whether portions of the entity name correspond to statistically common terms; and
portions of the entity name corresponding that in combination are less common than the common statistically common terms are maintained.

12. A method as in any one of the preceding claims, wherein portions of the entity name corresponding to proper names are maintained.

13. A method as in any one of the preceding claims, wherein generating the plurality of variants comprises one or more of a group consisting of: removing quotes, preserving special punctuation, preserving dashes, removing bracketed terms, and replacing multiple spaces with single spaces.

14. An article of manufacture comprising computer executable instructions non-transitorily stored on computer readable media, which, when executed by at least one data processor, causes one or more data processors to perform operations according to any one of the preceding claims.
